(19) Europäisches Patentamt / European Patent Office / Office européen des brevets

(11) **EP 3 804 987 A1**

(12) **EUROPEAN PATENT APPLICATION**
published in accordance with Art. 153(4) EPC

(43) Date of publication:
**14.04.2021 Bulletin 2021/15**

(21) Application number: **19811474.6**

(22) Date of filing: **04.03.2019**

(51) Int Cl.:
**B32B 27/32** (2006.01)      **B65D 65/40** (2006.01)
**C08J 5/18** (2006.01)      **C08J 7/04** (2020.01)

(86) International application number:
**PCT/JP2019/008307**

(87) International publication number:
**WO 2019/230097 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2018 JP 2018104473**

(71) Applicant: **TOYOBO CO., LTD.**
**Osaka-shi**
**Osaka 530-8230 (JP)**

(72) Inventors:
• **SAWADA, Kaoru**
**Otsu-shi, Shiga 520-0292 (JP)**
• **YAMADA, Koji**
**Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **LAMINATED POLYPROPYLENE FILM**

(57)    The present invention provides a laminated polypropylene film having good transferability and adhesiveness to printing ink, less electrically charged, and excellent in transparency. The laminated polypropylene film includes a resin layer on at least one side of a polypropylene film substrate, and the resin layer includes at least a polyurethane resin, an ethylene-based copolymer resin and an antistatic agent; and the ethylene-based copolymer is 5 parts by mass or more and 50 parts by mass or less based on 100 parts by mass of the polyurethane resin.

**EP 3 804 987 A1**

**Description**

TECHNICAL FIELD

The present invention relates to a polypropylene film presenting good printing performances and adhesiveness. More specifically, the present invention relates to a polypropylene film having good transferability of UV ink and adhesiveness to UV ink in printing processes, and high transparency.

BACKGROUND ART

For packaging materials for products such as food, medical products, and industrial products, films made of plastics such as polyolefin, polyester, and polyamide are often used as a film substrate. Especially, polypropylene film among the polyolefin films is versatilely used for wide purposes such as packaging materials for food and various products, electric insulation, surface protection films, thanks to its good mechanical property, thermal property, electric property, and optical property.

However, since polypropylene film does not have polar groups as a functional group due to its molecular structure, its surface has low wettability and it lacks transferability of various printing ink and adhesiveness to various printing ink. In addition, polypropylene film is prone to produce static electricity by friction in occasions such as printing processes to attract dust and the like due to the electrostatic charge, which result in degradation in printing appearance.

Methods for improving adhesiveness includes corona discharge treatment, low-temperature plasma treatment, flame treatment, which are performed on the surface of the polypropylene film. Such treatments can improve transferability for various printing ink and adhesiveness to printing ink.

However, the above methods still have problems that printing appearance is deteriorated by electrostatic charge, and transferability of printing ink and adhesiveness become altered or deteriorated over time.

A way to prevent electrostatic charge is a method where an antistatic agent is added to the polypropylene film substrate. However, the antistatic agent in the polypropylene film substrate may deposit on the surface, and antistatic performance of the polypropylene film substrate may deteriorates.

Considering the above, a method where a resin having transferability of printing ink and adhesiveness to printing ink is laminated to the polypropylene film substrate has been proposed (For example, see Patent Document 1).

However, while electrostatic charge of the polypropylene film can be prevented, the transferability and the adhesiveness to printing ink has not been satisfactory.

RELATED ART DOCUMENT

PATENT DOCUMENT

Patent Document 1: JP-A-2001-107029

SUMMARY OF THE INVENTION

PROBLEMS TO BE SOLVED BY THE INVENTION

The purpose of the present invention is, to solve the aforementioned problems, to offer a laminated polypropylene film having good transferability of printing ink and adhesiveness to printing ink, less electrostatic charge, and good transparency.

MEANS FOR SOLVING THE PROBLEMS

Present inventors carried out intensive studies to solve the aforementioned problems, and eventually completed the present invention. Namely, the present invention is as follows.

The present invention is a laminated polypropylene film comprising: a polypropylene film substrate; and a resin layer disposed on at least one side of the polypropylene film substrate, the resin layer comprising at least a polyurethane resin, an ethylene-based copolymer resin, and an antistatic agent, wherein the resin layer includes 5 parts by mass or more and 50 parts by mass or less of ethylene-based copolymer resin based on 100 parts by mass of polyurethane resin.

Preferably, the resin layer includes polyurethane resin having a glass transition temperature of 40°C or lower.

Preferably, the resin layer has a thickness of 0.03 $\mu$m or more and 0.20 $\mu$m or less.

EFFECTS OF THE INVENTION

The polypropylene film of the present invention has high transparency, and not prone to deterioration in printing appearance due to electrostatic charge, and has good transferability of printing ink and adhesiveness to printing ink, which change little over time, and therefore, it enables printing processes using various printing ink. Furthermore, since the properties of the polypropylene film is stable for a long period, it can be suitably used as packaging films for food and various products, which contributes greatly to the industries.

MODE FOR CARRYING OUT THE INVENTION

Hereinafter, the present invention will be described in detail.

(Film substrate)

In the present invention, as a polypropylene film, a biaxially-oriented polypropylene film is preferable that is formed by biaxially extending polypropylene-based resin.
The polypropylene-based resin referred to here is preferably at least one selected from a group consisting of isotactic propylene homopolymers insoluble in n-heptane, and copolymers of propylene including 70 % by mole or more of propylene and other $\alpha$-olefins.
The above polypropylene-based resin is preferably included by 80 % by weight or more relative to resin components constituting the polypropylene film, and more preferably 90 % by weight or more.
The polypropylene-based resin used for the polypropylene film necessarily has a melting point of 156°C or higher. The melting point is measured by the method described in the following Examples. If the melting point is lower than 156°C, conveying the film in automated packaging processes cannot be made smoother, which causes the obtained packaging bag to be likely to get wrinkled.
N-heptane insolubility is an index to both crystallizability of polypropylene and safety when used as a food packaging material. In preferable embodiments of the present invention, polypropylene conforming with the requirement of n-heptane insolubility in Public Notice of the Ministry of Health, No. 20 of February, 1982 (an elution amount is 150 ppm or less when extracted at 25°C for 60 minutes [30 ppm or less in the case of operating temperatures of 100°C or higher]) is used.
Use of the aforementioned biaxially-oriented polypropylene film enables a film to be excellent in mechanical property, thermal property, electric property, and optical property, and suitably used as a packaging film for food and various products.
The thickness of the polypropylene film is, from a viewpoint of economic efficiency and so on, preferably 10 $\mu$m to 100 $\mu$m, preferably 10 $\mu$m to 60 $\mu$m, and more preferably 15 $\mu$m to about 50 $\mu$m. In addition, various additives or stabilizers including, for example, an antistatic agent, an ultra-violet inhibitor, a plasticizer, and a lubricant agent may be used, and it is acceptable for corona treatment, low-temperature plasma treatment, and ion bombardment treatment to be performed to the polypropylene film as a pretreatment, and furthermore, chemical treatment and solvent treatment are also acceptable.
In the present invention, the polypropylene film preferably has a haze of 3.0 % or less. If the haze is more than 3.0 %, the polypropylene film becomes inferior in transparency, which results in less visibility of printing.

(Resin layer)

A resin layer used in the present invention is disposed on at least one side of the polypropylene film substrate. The resin layer includes at least a polyurethane resin, an ethylene-based copolymer resin, and an antistatic agent.

(Polyurethane resin)

The aforementioned polyurethane resin includes, as constituents, at least a polyol-derived component and a polyisocyanate-derived component, and as necessary, further includes a chain extender. The polyurethane resin of the present invention is a polymer compound made by copolymerization of these constituents by urethane linkage.
The polyol includes polyester polyol, polyether polyol, polycarbonate polyol, polyolefin polyol, and acrylic polyol.
The polyester polyol can be obtained from the reaction of polyvalent carboxylic acid such as malonic acid, succinic acid, adipic acid, sebacic acid, fumaric acid, maleic acid, terephthalic acid, isophthalic acid, and acid anhydride thereof; and polyol such as ethylene glycol, diethylene glycol, triethylene glycol, propylene glycol, butanediol, 1,3-butanediol, 1,4-butanediol, 2,3-butanediol, neopentyl glycol, 1,6-hexanediol.
The polyether polyol is exemplified by polyethylene glycol, polypropylene glycol, polyethylene propylene glycol, poly tetramethylene ether glycol, and poly hexamethylene ether glycol.

Among the above polyols, polyester polyol is preferable from a viewpoint of water resistance, and especially polyol obtained from adipic acid, sebacic acid, terephthalic acid, and isophthalic acid is preferable.

The polyisocyanate includes aromatic diisocyanate, araliphatic diisocyanate, alicyclic diisocyanate, aliphatic diisocyanate, and polyisocyanate obtained by preliminarily adding one or more of the above polyisocyanate to trimethylol propane and the like.

The aromatic diisocyanate is exemplified by tolylene diisocyanate, and 4,4-diphenylmethane diisocyanate.

The araliphatic diisocyanate is exemplified by xylylene diisocyanate.

The alicyclic diisocyanate is exemplified by isophorone diisocyanate, 4,4-dicyclohexyl methane diisocyanate, and 1,3-bis(isocyanatomethyl)cyclohexane.

The aliphatic diisocyanate is exemplified by hexamethylene diisocyanate, and 2,2,4-trimethylhexamethylene diisocyanate.

Among the above polyisocyanate, aromatic diisocyanate is preferable, and especially tolylene diisocyanate is preferable.

The chain extender includes short chain diol and short chain diamine. The short chain diol is exemplified by ethylene glycol and tetramethylene glycol. The short chain diamine is exemplified by ethylenediamine and tetramethylene diamine.

The polyurethane resin used in the present invention preferably has a glass transition temperature of 40°C or lower. If the glass transition temperature is higher than 40°C, adhesiveness to UV ink and the like may deteriorates, and compatibility with the antistatic agent in the process of applying and drying the resin layer also may decreases, which prevents wettability and antistatic property suitable for printability from being compatible with each other.

The polyurethane resin used in the present invention is preferably dissolved in aqueous solvent from the viewpoint of reducing environmental burdens and preventing residual organic solvent in the formed resin layer when forming the resin layer using coating solution including the polyurethane resin. The aqueous solvent referred to here is water or mixed solvent of water and alcohol solvent. The mixing ratio of water to alcohol solvent is preferably 100/0 to 50/50 (% by weight).

To make the polyurethane resin soluble in aqueous solvent, sulfonic acid (sulfonate) group or carboxylic acid (carboxylate) group may be introduced (copolymerized) to the urethane molecular backbone. Since sulfonic acid (sulfonate) group is highly acidic, it is sometimes difficult for sulfonic acid (sulfonate) group to maintain humidity resistance due to its hygroscopic property, and therefore, carboxylic acid (carboxylate) group, which is mildly acidic, is preferably introduced. In addition, nonionic groups such as polyoxyalkylene group may be introduced.

To introduce carboxylic acid (carboxylate) group to the polyurethane resin, for example, polyol compounds having carboxylic acid group such as dimethylolpropionic acid, and dimethylolbutanoic acid as copolymerized components is introduced to the polyurethane resin, which is neutralized by a salt forming agent. Specifically, the salt forming agent is exemplified by trialkylamines such as ammonia, trimethylamine, triethylamine, triisopropylamine, tri-n-propylamine, and tri-n-butylamine; N-alkylmorpholines such as N-methylmorpholine and N-ethylmorpholine; and N-dialkylalkanolamines such as N-dimethylethanolamine and N-diethylethanolamine. These salt forming agents may be used alone, or two or more of them may be used in combination.

In the case polyol having carboxylic acid (carboxylate) group is used as copolymerized components, the composition ratio by mole of the polyol having carboxylic acid (carboxylate) group in the polyurethane resin is preferably 3 to 60 % by mole, and preferably 5 to 40 % by mole, provided that the whole polyisocyanate components in the polyurethane resin is 100 % by mole. If the composition ratio by mole is less than 3 % by mole, dispersibility may become deteriorated. If the composition ratio by mole is more than 60 % by mole, water resistance may become decreased.

(Ethylene-based copolymer)

The ethylene-based copolymer used for the resin layer of the present invention means a copolymer of ethylene and α olefin other than ethylene. Preferably, the α olefin includes an alkene having 3 or more carbon atoms.

The ethylene-based copolymer and the polyurethane resin used in the present invention is preferably dissolved in aqueous solvent from the viewpoint of reducing environmental burdens and preventing residual organic solvent in the formed resin layer when forming the resin layer using coating solution including the ethylene-based copolymer and the polyurethane resin. The aqueous solvent referred to here is water or mixed solvent of water and alcohol solvent. The mixing ratio of water to alcohol solvent is preferably 100/0 to 50/50 (% by weight). To make the ethylene-based copolymer soluble in aqueous solvent, α olefin preferably includes acrylic acid, methacrylic acid, or a salt thereof.

Such ethylene-based copolymer is exemplified by ethylene-(meth)acrylic acid copolymer, ethylene-(meth)acrylate copolymer, ethylene-(meth)acrylic acid ester-(meth)acrylic acid copolymer, ethylene-(meth)acrylic acid ester-(meth)acrylate copolymer, ethylene-(meth)acrylic acid-maleic anhydride copolymer, ethylene-acrylate-maleic anhydride copolymer, ethylene-glycidyl (meth)acrylic acid ester copolymer, and copolymer thereof further with 1-alken.

Among them, ethylene-(meth)acrylate-1-alken copolymer is preferable, and more preferably ethylene-acrylate-1-alken copolymer from the viewpoint of adhesiveness to UV ink.

The content of the component derived from ethylene in the ethylene-based copolymer is preferably 50 % by weight or more from the viewpoint of adhesiveness to the film substrate.

It is important for the resin layer of the present invention to include 5 parts by mass or more and 50 parts by mass or less of the ethylene-based copolymer resin based on 100 parts by mass of polyurethane resin. If the ethylene-based copolymer resin is less than 5 parts by mass, not only adhesiveness of the resin layer to the film substrate decreases, but also antistatic property becomes insufficient because the antistatic agent is prevented from migrating to the surface in the process of applying and drying the resin layer. If the ethylene-based copolymer resin is more than 50 parts by mass, not only adhesiveness of the resin layer to UV ink decreases, but also transferability becomes deteriorated to be inappropriate for printing because the antistatic agent is present excessively on the surface.

(Antistatic agent)

The antistatic agent used for the resin layer of the present invention is exemplified by at least one compound selected from the group consisting of alkylamine derivatives, aliphatic amide derivatives, polyhydric alcohol esters, alkyl sulfonates, alkyl benzene sulfonates, alkyl sulfates, alkyl phosphates, and quaternary ammonium salts.

The alkylamine derivatives include polyoxyethylene alkyl ether, polyoxyethylene alkyl phenyl ether, and polyoxyethylene alkyl amine.

The aliphatic amide derivatives include alkylamine derivatives and hydroxystearic acid amide.

The polyhydric alcohol esters include glycerin fatty acid ester.

The quaternary ammonium salts include quaternary ammonium chloride, quaternary ammonium sulfate, and quaternary ammonium nitrate.

Among the above, quaternary ammonium chloride is preferable from the viewpoint of antistatic property.

It is important for the resin layer of the present invention to include 20 parts by mass or more and 70 parts by mass or less of the antistatic agent based on 100 parts by mass of polyurethane resin. If the antistatic agent is less than 20 parts by mass, antistatic property decreases. If the antistatic agent is more than 70 parts by mass, not only adhesiveness of the resin layer to UV ink decreases, but also transferability becomes deteriorated to be inappropriate for printing because the antistatic agent is present excessively on the surface.

(Additives)

In order to add another functionality to the resin layer, various additives may be included in the resin layer without departing from the purpose of the present invention. The additives include, for example, a surfactant, a fluorescent dye, a fluorescent optical brightener, a plasticizer, an ultraviolet absorber, a pigment dispersant, a foam inhibitor, a defoaming agent, an antiseptic agent, and a lubricant agent.

(Other layers)

The present invention allows other layers having other functions such as other antistatic layer, other resin layer, an adhesive layer, a slippery layer, and a resin layer including colorants such as pigment and dye to be added to the film substrate on the side on which the resin layer is not disposed, without blocking the beneficial effect of the present invention.

(Production process)

A process for laminating the resin layer of the present invention preferably includes a step of applying application liquid made by dissolving or dispersing the resin component including the polyurethane resin, the ethylene-based copolymer resin, and the antistatic agent on the film substrate, and a subsequent step of drying. The method of applying includes generally known methods such as a gravure coating method, a kiss coating method, a dip coating method, a spray coating method, a curtain coating method, an air knife coating method, a blade coating method, a reverse roll coating method, a bar coating method, and a lip coating method.

The thickness of the resin layer after application and drying, which depends on the degree of required properties of the resin layer and antistatic property, preferably 0.03 $\mu$m or more and 0.20 $\mu$m or less, and the lower limit is preferably 0.05 $\mu$m or more and the upper limit is preferably 0.15 $\mu$m or less. If the thickness of the resin layer is less than 0.03 $\mu$m, transferability of printing ink, adhesiveness, and antistatic property are difficult to improve, while the thickness of the resin layer of more than 0.20 $\mu$m does not lead to improvement in properties, and is unfavorable since it results in increase in production costs and loads of application and drying.

A method for drying after applying the application liquid on the film substrate includes generally known methods such as hot-air drying and drying with an infrared heater, and the drying with an infrared heater, with which drying speed can be increased, is preferable.

A drying temperature after application is preferably 40°C or higher and 150°C or lower, and especially, the lower limit is preferably 45°C or higher, and the upper limit is preferably 120°C or lower. If the drying temperature is lower than 40°C, not only it is difficult for solvent included in the application liquid to be removed enough, but also problems such as blushing may occur. On the other hand, if the drying temperature is higher than 150°C, minute defects of the coated film such as loss of coating, micro crawling, and cracks are likely to appear to blemish the appearance. Furthermore, the film substrate largely shrinks due to heat, so that flatness and mechanical properties of the film substrate become deteriorated because of heat wrinkles.

EXAMPLES

Hereinafter, the present invention will be specifically described with reference to examples and comparative examples. The present invention, however, is not limited by the following examples. Film properties obtained in examples are measured and evaluated in accordance with the following methods.

(Evaluation method)

(1) Thickness of resin layer

Samples prepared with the following process were observed with a transmission electron microscope. First, a piece of obtained polypropylene film including a resin layer was cut out in the direction perpendicular to the longitudinal direction of the film, and the piece was embedded in epoxy resin. The epoxy resin was prepared by thoroughly mixing LUVEAK-812, LUVEAK-MNA (both of which are manufactured by Nacalai Tesque, Inc.), and DMP30 (manufactured by TAAB Laboratories Equipment Ltd.) at a ratio by weight of 100: 89: 3. The sample film was embedded in the epoxy resin, which was then left in an oven the temperature of which was set at 60°C for 16 hours to cure the epoxy resin, and an embedded block was obtained.

The obtained embedded block was set to Ultracut manufactured by Nissei Sangyo to produce an ultrathin section. First, the embedded block was trimmed with a glass knife so that a cross-sectional surface of the portion that was expected to be observed emerged on the surface of the resin. Next, the ultrathin section was cut out with a diamond knife (Sumi Knife SK2045, manufactured by Sumitomo Electric Industries, Ltd.). The cut ultrathin section was collected on a mesh, and then carbon was thinly vapor deposited.

The cross-sectional surface of the film was observed by the transmission electron microscope JEM-2010 manufactured by JEOL Ltd. under the condition of accelerating voltage of 200 kV to obtain an image, from which the thickness of the resin layer was determined.

(2) Glass transformation temperature

In accordance with JIS K7121, using a differential scanning calorimeter (DSC6200, manufactured by Seiko Instruments Inc.), 10 mg of urethane resin sample was heated in a temperature range of 25°C to 300°C at a rate of 20°C/min to obtain an extrapolated glass transition onset temperature from a DSC curve, which was determined to be a glass transition temperature.

(3) Surface free energy

A sample of the polypropylene film including a resin layer was left under the condition of relative humidity of 50 % for 24 hours, and then, using a FACE contact angle meter (CA-X, manufactured by Kyowa Interface Science Co., Ltd.), a contact angle of distilled water and a contact angle of diiodomethane after being dropped on the side of the resin layer were measured. The contact angles were determined by measuring contact angle of each sample five times, eliminating the largest value and the smallest value, and averaging the remaining three values. From the contact angle of distilled water and the contact angle of diiodomethane, surface free energy ys was calculated, and it was determined that the sample with the surface free energy ys of 45 to 60 mN/m had wettability.

(4) Haze

In accordance with JIS K7136, using a haze meter (NDH2000, manufactured by Nippon Denshoku Industries Co., Ltd.), haze was measured.

(5) Surface resistance

Using a surface resistivity meter (Loresta-UP MCP-HT450, manufactured by Mitsubishi Chemical Corporation), a surface resistance of a surface of the resin layer of the polypropylene film including the resin layer was measured under the condition of 20°C, 55%RH at applied voltage of 500 V. If the surface resistance was 14.0 log($\Omega/\square$) or less, it was determined that the sample has antistatic property, and especially, the case in which the surface resistance was 13.0 log($\Omega/\square$) or less was determined to be good.

(6) Transferability

Using a RI tester (model RI-3, manufactured by Mei Seisakusho Co., Ltd.), a printed sample was obtained by printing UV ink (BESTCURE UV161 indigo S, manufactured by T&K TOKA Co., Ltd.) on a surface of the resin layer of the polypropylene film including the resin layer, and getting the printed film passed under a high-pressure mercury lamp with an output of 120 W/cm by 20 cm (accumulated light quantity of 100 mJ/cm$^2$) at a rate of 10 m/min. The degree of printing appearance of the printed sample was visually observed, and samples showing good transferability with no fading of the ink or uneven printing were classified as rank A, samples with fading of the ink or uneven printing in the area less than 10 % of the printed area were classified as rank B, and samples with fading of the ink or uneven printing in the area more than 10 % of the printed area were classified as rank C. Samples classified as rank A or rank B were determined to have printability, and especially, samples classified as rank A were determined to have good printability.

(7) Adhesiveness

One hundred of cuts having a chessboard pattern that arrived at the polypropylene film including the resin layer through the ink layer were made on the printed sample obtained by the abovementioned way with a cutter guide having a gap of 2 mm. Then, adhesive cellophane tape (No. 405, 24 mm width, manufactured by Nichiban Co., Ltd.) was attached on the surface having chessboard patterned cuts, which was rubbed with an eraser to make the adhesive cellophane tape completely stick with the surface. Subsequently, the adhesive cellophane tape was vertically rip from the surface of the ink layer for one time, and the number of peeled squares from the surface of the ink layer of the printed sample was visually counted, and the adhesiveness of the ink layer and the polypropylene film including the resin layer was obtained according to the below-mentioned equation. Note that partially peeled squares were counted as peeled squares, and the samples were classified on the basis set forth below.

$$\text{Adhesiveness (\%)} = (1\text{- the number of peeled squares}/100) \times 100$$

A: 100 %, or break of the ink layer
B: 99 to 70 %
C: 69 to 0 %

Samples classified as rank A or B were determined to have adhesiveness, and especially, samples classified as rank A were determined to have good adhesiveness.
Resins, compounds, and solvent used in the resin layer is as follows.

(A-1: water dispersible polyurethane resin)

HYDRAN AP-201 (manufactured by DIC Corporation, glass-transition temperature: 10°C, polyester-urethane obtained from tolylene diisocyanate and polyol consisting of terephthalic acid, isophthalic acid, sebacic acid, and adipic acid)
HYDRAN AP-40N (manufactured by DIC Corporation, glass-transition temperature: 40°C, polyester-urethane obtained from tolylene diisocyanate and polyol consisting of terephthalic acid, isophthalic acid, sebacic acid, and adipic acid)
HYDRAN AP-30F (manufactured by DIC Corporation, glass-transition temperature: 60°C, polyester-urethane obtained from tolylene diisocyanate and polyol consisting of terephthalic acid, isophthalic acid, sebacic acid, and adipic acid)

(A-2: acrylic resin)

Joncryl PDX-6102B (manufactured by BASF Ltd., glass-transition temperature: 25°C, styrene-acrylic acid copolymer)

(B: ethylene-based copolymer resin)

Hi-tech S-9201 (manufactured by TOHO Chemical Industries Co., Ltd., ethylene-methacrylic acid-1-alkene copolymer)

(C: antistatic agent)

ELECUT C-048 (manufactured by Takemoto Oil & Fat Co. Ltd., quaternary ammonium chloride)

(D: solvent)

water/isopropanol = 70/30 solution

(Examples 1 to 6, Comparative Examples 1 to 5)

Polypropylene films including a resin layer of Examples 1 to 6 and Comparative Exampled 1 to 5 were obtained by applying application liquid used for forming the resin layer by gravure coating on a corona treated surface of a biaxially-oriented polypropylene film (P2108, manufactured by TOYOBO Co. Ltd., thickness of 40 $\mu$m), and drying them at 100°C for 30 seconds.
Composition of the application liquid used for forming the resin layer and thickness of the resin layer after applying and after drying are shown in Table 1.
Properties of the obtained laminated polypropylene film are also shown in Table 1.
The laminated polypropylene film of Example 1 to 6 had antistatic property, and also satisfied transferability of UV ink and adhesiveness to UV ink.
On the other hand, Comparative Example 1 and Comparative Example 4 did not satisfy transferability of UV ink due to no urethane resin.
Comparative Example 2 did not satisfy transferability of UV ink due to high proportion of ethylene-based resin to urethane resin.
Comparative Example 3 did not satisfy adhesiveness to UV ink due to no ethylene-based resin.
Comparative Example 5 did not have antistatic property due to no antistatic agent.

[Table 1]

| | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| resin, compound, solvent used in application liquid for forming resin layer | A-1: urethane resin | AP-201 | AP-40N | AP-30F | AP-201 | AP-201 | AP-201 | - | AP-201 | AP-201 | - | AP-201 |
| | blend ratio (% by mass, in the whole solid content) | 55 | 55 | 55 | 65 | 47.5 | 55 | - | 40 | 80 | - | 75 |
| | A-2: acrylic resin | - | - | - | - | - | - | PDX-6102B | - | - | - | - |
| | blend ratio (% by mass, in the whole solid content) | - | - | - | - | - | - | 55 | - | - | - | - |
| | B: ethylene-based copolymer resin | S-9201 | S-9201 | S-9201 | S-9201 | S-9201 | S-9201 | S-9201 | S-9201 | | S-9201 | S-9201 |
| | blend ratio (% by mass, in the whole solid content) | 25 | 25 | 25 | 5 | 22.5 | 25 | 25 | 40 | | 80 | 25 |
| | C: antistatic agent | C-048 | C-048 | C-048 | C-048 | C-048 | C-048 | C-048 | C-048 | C-048 | C-048 | |
| | blend ratio (% by mass, in the whole solid content) | 20 | 20 | 20 | 30 | 30 | 20 | 20 | 20 | 20 | 20 | |
| | D: solvent | water/ isopropanol= 70/30 (% by weight) | same as the left | same as the left | same as the left | same as the left | same as the left | same as the left | same as the left | same as the left | same as the left | same as the left |
| | blend ratio (% by mass, in the whole solid content) | 20 | 20 | 20 | 30 | 30 | 20 | 20 | 20 | 20 | 20 | |
| | ratio of ethylene-based copolymer to 100 parts by mass of urethane resin (part by mass) | 20 | 45 | 45 | 45 | 8 | 47 | - | 100 | 0 | - | 33 |

(continued)

| properties of laminate | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| | thickness (μm) | 0.10 | 0.10 | 0.10 | 0.10 | 0.03 | 0.20 | 0.10 | 0.10 | 0.10 | 0.10 | 0.10 |
| | grass-transition temperature of urethane resin (°C) | 10 | 40 | 60 | 10 | 10 | 10 | - | - | 10 | 10 | 10 |
| | surface free energy (mN/m) | 53 | 47 | 45 | 49 | 46 | 59 | 44 | 61 | 53 | 63 | 36 |
| | haze (%) | 1.8 | 1.9 | 1.9 | 1.8 | 1.5 | 1.9 | 2.2 | 1.8 | 1.8 | 1.8 | 1.8 |
| | surface resistance (Ω/□) | 10.8 | 11.9 | 13.6 | 11.7 | 12.9 | 10.2 | 11.5 | 11.1 | > 14.0 | 10.2 | > 14.0 |
| | transferability | A | A | B | A | A | A | B | C | A | C | A |
| | adhesiveness | A | A | B | A | A | A | C | B | C | C | A |

INDUSTRIAL APPLICABILITY

The laminated polypropylene film of the present invention has good transferability and adhesiveness to printing ink, and can be also given antistatic property without deteriorating the former properties, which makes it possible for the film to be versatilely and widely used in the packaging field thanks to its superiority in transparency and design as packaging materials, at the same time to be easily treated when printing.

**Claims**

1. A laminated polypropylene film comprising:

   a polypropylene film substrate; and
   a resin layer disposed on at least one side of the polypropylene film substrate, the resin layer comprising at least a polyurethane resin, an ethylene-based copolymer resin, and an antistatic agent, wherein
   the resin layer includes 5 parts by mass or more and 50 parts by mass or less of ethylene-based copolymer resin based on 100 parts by mass of polyurethane resin.

2. The laminated polypropylene film according to claim 1, wherein the resin layer includes polyurethane resin having a glass transition temperature of 40°C or lower.

3. The laminated polypropylene film according to claim 1 or 2, the resin layer has a thickness of 0.03 μm or more and 0.20 μm or less.

## INTERNATIONAL SEARCH REPORT

| International application No. |
|---|
| PCT/JP2019/008307 |

| A. CLASSIFICATION OF SUBJECT MATTER |
|---|
| Int. Cl. B32B27/32(2006.01)i, B65D65/40(2006.01)i, C08J5/18(2006.01)i, C08J7/04(2006.01)i |

According to International Patent Classification (IPC) or to both national classification and IPC

| B. FIELDS SEARCHED |
|---|

Minimum documentation searched (classification system followed by classification symbols)
Int. Cl. B32B27/32, B65D65/40, C08J5/18, C08J7/04

Documentation searched other than minimum documentation to the extent that such documents are included in the fields searched
```
Published examined utility model applications of Japan     1922-1996
Published unexamined utility model applications of Japan   1971-2019
Registered utility model specifications of Japan           1996-2019
Published registered utility model applications of Japan   1994-2019
```

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X <br> A | JP 2016-132716 A (MITSUI CHEMICALS, INC.) 25 July 2016, paragraphs [0168], [0202], [0228]-[0230], [0232], [0233], example 1 (Family: none) | 1, 3 <br> 2 |
| A | JP 2008-162059 A (FUTAMURA CHEMICAL CO., LTD.) 17 July 2008, paragraphs [0021]-[0035] (Family: none) | 1-3 |
| A | JP 2017-98369 A (DU PONT MITSUI POLYCHEM CO., LTD.) 01 June 2017, paragraphs [0014]-[0053] (Family: none) | 1-3 |

☐ Further documents are listed in the continuation of Box C.      ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16.05.2019 | 28.05.2019 |

| Name and mailing address of the ISA/ <br> Japan Patent Office <br> 3-4-3, Kasumigaseki, Chiyoda-ku, <br> Tokyo 100-8915, Japan | Authorized officer |
|---|---|
| | Telephone No. |

Form PCT/ISA/210 (second sheet) (January 2015)

**EP 3 804 987 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001107029 A